# EUROPEAN PATENT APPLICATION

(11) **EP 1 323 799 A1**
(43) Date of publication of application: **02.07.2003**
(21) Application number: 01947475.8
(22) Date of filing: 06.07.2001
(51) Int. Cl.: C09H 3/00, C08L 89/04, A23J 1/04, A23J 3/06, A23L 1/0562

(54) **METHOD FOR THE PRODUCTION OF GELATIN OF MARINE ORIGIN AND PRODUCT THUS OBTAINED**

(30) Priority: 28.07.2000 ES 200001925
(71) Applicant: CONSEJO SUPERIOR DE INVESTIGACIONES CIENTIFICAS, 28006 Madrid (ES)
(72) Inventor: MONTERO GARCIA, Maria, del, Pilar, Insto. Frio, E-28040 Madrid (ES); GOMEZ GUILLEN, Maria, del, Carmen, Insto. Frio, E-28040 Madrid (ES)
(74) Representative: Ungria Lopez, Javier
(86) International application number: ES0100275
(87) International publication number: WO02012408

(57) **Abstract**

The invention relates to the production of gelatin from the skins of marine animals and residues of connective tissue from fasciae and muscles, by means of several production stages. After washing the skins and/or connective tissue several times by strongly shaking them in a cold sodium chloride solution, they are treated with a diluted alkali and then neutralized and washed with water. Treatment with organic acid is of fundamental importance, the application of acetic or lactic acid being of interest in order to obtain high rheological properties and yield. After washing, the gelatin is extracted in water by means of heat treatment. Subsequent drying is performed by heat, spraying or lyophilization. Several compounds are added to this proteic material to form the final product or gelatin.

## Description

### TECHNICAL FIELD OF THE INVENTION

Gelatins habitually used in several areas such as food, cosmetic pharmacy or photography are produced from skins or other parts such as bones or cartilage and viscera of animals from slaughterhouses. These gelatins are classified in the industry according to their rheological properties and are characteristically odor-free and quite translucent. These gelatins are less frequently marketed in several populations for religious as well as health reasons. The present patent refers to the improvement in the yield and the manufacturing process of the gelatin obtained from the skins and connective tissue of marine animals.

### BACKGROUND OF THE INVENTION

The industrial processing of gelatin basically consists in obtaining soluble gelatin from the collagen of bones, cartilage, viscera or skins. The origin, age and type of collagen has a great influence on the properties of the gelatin obtained. The manufacturing method also greatly affects the physical-chemical properties of the gelatin. This basically proteic material is widely applied in food, the pharmaceutical and cosmetic industry and in the photographic industry.

The advantages of obtaining gelatins from fish collagen are evident since this has a great economic and social impact, owing primarily to religious and/or moral problems as well as to health problems. gelatin from marine animals is obtained from residues: skins and residues of connective tissue, which makes this an economically viable method.

At present there is a patent in the United States to manufacture gelatins from fish skins consisting of first washing the skins with water to eliminate residues and then washing them consecutively two more times, first with a diluted alkali and then with diluted mineral acid. This is followed by an acid treatment stage, principally citric acid which gives the product high quality. Subsequently there are several stages where the product is washed with water, then the gelatin is extracted in water by heat at a temperature ranging from 40º-50ºC in order to obtain better physical properties.

Part of the technical difficulties lie in eliminating the unpleasant odor, often associated with fish products, as well as obtaining rheological properties similar to those obtained in gelatins from the collagen of slaughterhouse animals. The odor of the skins is owing to the large quantity of components they contain, principally nitrogenated compounds, residues of muscular proteins which remain adhered and fat, which are partially eliminated in the initial stages of the process. Obtaining physical characteristics similar to those of slaughterhouse animals, as well as obtaining a high yield are the main objects of our invention, where several treatments which improve the state of the current technology are introduced.
- It is a method which may be applied to a large number of marine species, and is obtained from residues or remains from processing, and consequently its use would imply a revaluation.
- It is a product which can be used by a wide sector of the population, and for several industries, such as food, pharmaceuticals, cosmetics, and photography.
- The yield would be high
- The characteristics would be more varied than those shown by the usual gelatins on the market

### DESCRIPTION OF THE INVENTION

The object of the invention is to obtain a gelatin which is characterized as having a wide spectrum of characteristics, that is, competitive in the industry, deodorized and translucent. It is made of denaturalized collagen and some or all of the following ingredients may be added to it: water, salts (such as sulfates, phosphates, chlorides), hydrocolloids (such as hydroxymethylcellulose, carrageenan, guar), covalent bond-inducing agents (such as transglutaminase, cysteine) sugars such as glucose and types of alcohol such as glycerol. Whether all or only some of these ingredients intervene varies in terms of the conditions and characteristics of the original product as well as the chemical and physical treatment to which it is later subject; it will also depend on the characteristics that are desired to be obtained in accordance with the final use of this product.

The final object of the invention is the method of obtaining the product. This method is characterized by washing the skins and/or connective tissue several times by strongly shaking them in a NaCl solution, and then treating them with a diluted alkali in order to fully clean the product and prepare it for pre-solubilization; the duration and intensity will depend on the condition of the raw material. After washing for neutralization, it is treated with diluted acid, if possible with acetic, formic, propionic or lactic acid, since their denaturalizing power is greater than that of other acids such as citric, tartaric, fumaric, malic acids, ... The properties brought about by acetic, formic, propionic or lactic acid, both in regard to swelling as well as to solubilizers at relatively high pH acids, makes it possible to obtain a product with high final properties. In the case of lactic acid, it is necessary to adjust the pH between 4 and 5 in order to obtain these characteristics, which are not achieved, however, when using the acids described in the preceding state of the art. Treatment with lactic acid is odor-free, and although acetic or propionic acid give off a strong, characteristic odor, this odor is eliminated during subsequent washing. The concentration of the acid(s) as well as the time spent in the acid will depend on the condition of the raw material, how highly intertwined the collagen is, etc. Once the protein is pre-gelatinized it is washed thoroughly and the gelatin is extracted in water by means of heat treatment, not exceeding 100ºC. The specific characteristics and yield will depend on the temperature used and the time applied. Subsequently, the product is either air-dried or dried by spraying or lyophilization. Lastly, this proteic material is mixed together with the selected ingredients, there being a possibility of even obtaining a gelatin which has several degrees of thermo-irreversibility.

## Claims

1. A method for the production of gelatin of marine origin, **characterized in that** it comprises the following steps:
• from skins and remains of connective tissue comingfrom marine animals are used, which are strongly shaken in a cold salt solution, preferably sodium chloride, in a proportion of between 0.05M and 1M and is homogenized from 5 to 30 minutes, at least once;
• then, they are treated with a diluted alkali, preferably NaCH, in a proportion of between 0.05N and 1N, washed thoroughly with water and gently continuously shaken in an acid solution, preferably acetic, formic, propionic or lactic acid, in a proportion of between 0.01M and 1M depending on the acid and the raw material, for a period of time ranging from 10 minutes to 24 hours; the conditions chosen or others will likewise depend on the ionic strength and pH of the solution and on the characteristics of the raw material as well as on the yield wished to be obtained;
• then, the product is drained and rinsed with water; the product so obtained is put into water at a temperature not higher than 100ºC for several hours, between 1 and 48 hours;
• then it is dried, either by air or by atomization or lyophilization;
• finally, this proteinous material is mixed with the selected ingredients.

2. A method according to claim 1 **characterized in that** up to 10% in weight of one or several salts, such as sulfates, phosphates, chlorides, from different cations such as Na, Ca, Mg, NH4 can be added.

3. A method according to claim 1 **characterized in that** up to 10% in weight of one or several hydrocolloids, such as carrageenan, carboxymethylcellulose, guar, locust bean, maltodextrins can be added.

4. A method according to claim 1 **characterized in that** up to 5% in weight of covalent bond-forming agents such as transglutaminase, cysteine, bromates, ascorbates and proteins can be added.

5. A method according to claim 1 **characterized in that** up to 10% in weight of sugars such as glucose can be added.

6. A method according to claim 1 **characterized in that** up to 10% in weight of glycerol or other type of alcohol having similar characteristics can be added.

7. A method according to the preceding claims **characterized in that** heat treatment in a bath of water can be accomplished at temperatures of between 30 and 100ºC, for the time required to extract the gelatin.

8. A method according to the preceding claims **characterized in that** the heat treatment by drying can be accomplished at temperatures not exceeding 70ºC, for the time required to dry the gelatin, in fine layers.

9. A method according to one or several of the preceding claims **characterized in that** it can be subject to pasteurization treatment.

10. Gelatin of marine origin **characterized in that** it is made of denaturalized collagen, being able to be added at least one of the following ingredients: water; salts such as sulfates, phosphates, chlorides; hydrocolloids such as hydroxymethylcellulose, carrageenan, guar; covalent bond-inducing agents such as transglutaminase, cysteine; sugars such as glucose and types of alcohol such as glycerol; and combinations thereof.

11. A product according to the method of claim 1 which depending on the characteristics of the skins and/or remains of connective tissue, where there is one or several of the added ingredients and the percentages with which they are stated in the preceding claims.
